# EUROPEAN PATENT SPECIFICATION

(11) **EP 4 031 934 B1**
(45) Date of publication and mention of the grant of the patent: **02.12.2026**
(21) Application number: 20866811.1
(22) Date of filing: 31.08.2020
(51) Int. Cl.: G02C 7/04, G02C 7/08, G02B 1/04, G02C 7/10

(54) **MULTI-SPECTRAL AND MULTI-FOCAL CONTROL OF MYOPIA**
MULTISPEKTRALE UND MULTIFOKALE KONTROLLE VON MYOPIE
GESTION MULTI-SPECTRALE ET MULTI-FOCALE DE LA MYOPIE

(30) Priority: 19.09.2019 US 201962902817 P
(43) Date of publication of application: 27.07.2022
(73) Proprietor: The UAB Research Foundation, Birmingham AL 35233 (US)
(72) Inventor: GAWNE, Timothy Jerner, Birmingham, Alabama 35233 (US); NORTON, Thomas Tolles, Birmingham, Alabama 35211 (US)
(74) Representative: Bryers Intellectual Property Ltd
(86) International application number: PCT/US2020/048788
(87) International publication number: WO 2021/055162

(56) References cited:
- WO-A1-2018/076057
- CN-A- 109 975 995
- KR-A- 20140 074 271
- TW-B- I 500 993
- US-A- 5 838 419
- US-A1- 2008 218 687
- US-A1- 2010 053 550
- US-A1- 2011 141 434
- US-A1- 2012 010 703
- US-A1- 2014 247 423
- US-B2- 7 971 996

## Description

### STATEMENT REGARDING FEDERAL FUNDING

This invention was made with government support under the National Eye Institute grant numbers R21EY025254, RO1 028578, and P30EY003909. The government has certain rights in the invention.

In this context "government" refers to the government of the United States of America.

### BACKGROUND

In children, a self-correcting mechanism adjusts the growth of the eye so that the light-sensitive retina is located where images of the visual world are focused (the focal plane), producing clearly-focused vision ("emmetropia"). This mechanism uses visual cues to determine if the eye is too short (hyperopia) or has grown too long (myopia) relative to the focal plane and adjusts eye growth to move the retina back to emmetropia. However, in about 40% of people in the US, this mechanism allows the eyes to become too long so they are myopic (nearsighted). Even low amounts of myopia raise the risks of developing retinal holes or tears, retinal detachment, choroidal degeneration, glaucoma, cataract and other potentially blinding conditions caused by the elongated eye. Current treatments aimed at preventing or slowing the development of myopia have achieved only modest success.

Myopia (nearsightedness) is an enormous problem around the world, affecting perhaps more than 1 billion people worldwide. In myopia, the length of the eye is longer than optimal. Because myopia increases the risk for many retinal diseases, it is a leading cause of blindness worldwide. The economic cost of glasses, contact lenses, and refractive surgery is many millions of dollars in the US alone. However, these treatments do not remove the risk of blindness because they do not alter the length of the eye so it remains long. Myopia typically develops and increases (progresses) in childhood between the ages of 5 and 15. Slowing myopia development will require treatment throughout this extended period and thus must be safe in long-term use. Many companies are trying to develop effective ways to prevent children from developing myopia, or to slow the rate of myopia development so as to reduce the final amount in adulthood. Success using optical (contact lenses, glasses, wavelength filters) or pharmaceutical (eye drops) approaches has been limited. An effective, safe, non-invasive, non-pharmacological treatment that could be used in the home over many years would be of benefit to millions of people.

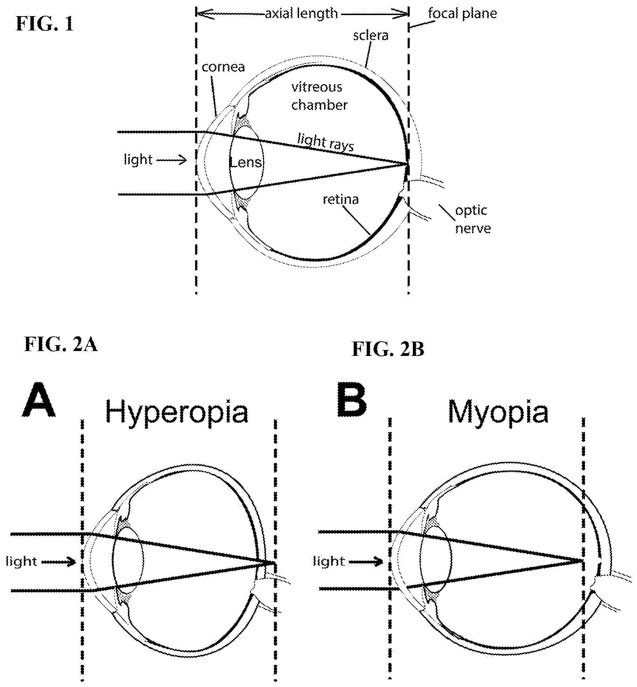

The eye of humans and, indeed, all vertebrates, is a globe with a clear tissue at the front, the cornea, through which light enters the eye. As shown in FIG. 1, light is focused by the cornea and the lens to a focal plane near the retina at the back of the eye. Surrounding the sides and back of the eye is the sclera. The distance from the front of the cornea to the sclera at the back of the eye is the axial length. The retina is the tissue just in front of the sclera that detects light, processes visual images and sends them through the optic nerve to central brain areas that produce visual perception.

For visual images to appear clear (not blurred) the axial length of the eye must position the retina at the focal plane. If the axial length is short relative to the focal plane (FIG. 2A), the images on the retina are blurry; the eye is hyperopic. If the axial length places the retina behind the focal plane (FIG. 2B), images also are blurry; the eye is myopic.

At birth, most human and animal eyes are hyperopic because the axial length is short relative to the focal plane (FIG. 2A). During postnatal development the eye grows longer and the self-correcting "emmetropization" feedback mechanism uses the out-of-focus images to guide the eye to grow until images are in focus on the retina (emmetropia, FIG. 1) and then controls further growth to keep the retina at the focal plane so images remain in focus. It is still not understood what aspects of the visual images are used by the emmetropization mechanism, but recent studies have found that the wavelength of light plays an important role. Outdoor light, and most indoor illumination, contains light of many wavelengths in the range of 400 to 700 nanometers that is visible to humans and other mammals.

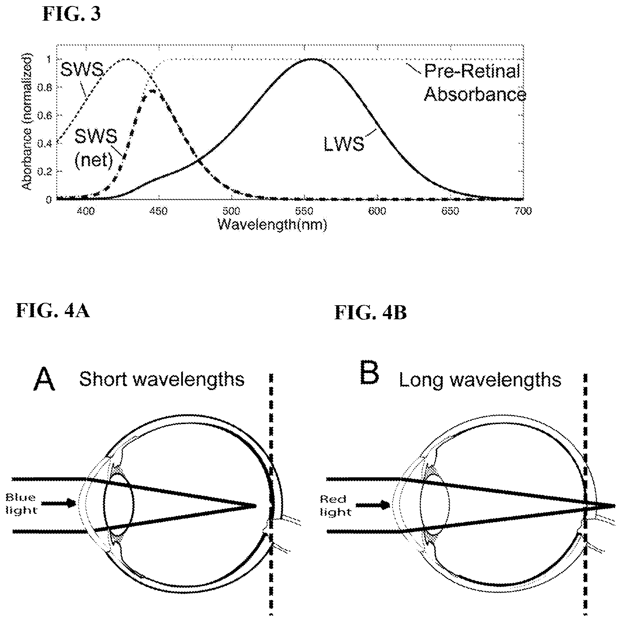

Light is detected because it is absorbed by the photopigments of the cones, the sensory cells in the retina. As shown in FIG. 3, there are two types of cones in most mammals, the short-wavelength sensitive (SWS) cones that preferentially absorb and detect blue light, and the long-wavelength sensitive (LWS) cones that preferentially detect red light. Both types of cones are present across the retina.

There also are two additional photopigments in the retina: rhodopsin in the low-light sensitive rods, and melanopsin in the intrinsically photosensitive retinal ganglion cells. However, these two pigments are not thought to be important for high-acuity vision in bright light. Also, most humans have a third middle-wavelength sensitive (MWS) cone photopigment. The peak of the MWS absorbance is close to that of the LWS photopigment and the profile of the MWS photopigment overlaps extensively with that of the LWS cones. Dichromatic humans that, like the tree shrew, only have two photopigments, emmetropize normally. Without wishing to be bound by any hypothetical model, for the purposes of emmetropization, it is believed that the human system is essentially the same as for tree shrews using cone photopigments that absorb at long, versus short wavelengths and predict that the model and the experimental results from tree shrews will generalize to humans.

As noted, outdoor lighting, and most indoor lighting, contain many wavelengths. The eye focuses different wavelengths (colors) of light (long wavelength/red, and short wavelength/blue) at different distances behind the cornea. Blue wavelengths (FIG. 4A) are in focus nearer the cornea than are red wavelengths (FIG. 4B), a property known as longitudinal chromatic aberration (LCA).

In recent years, both pharmacological and optical treatments have been examined and show promise for slowing, but not eliminating, axial elongation and myopia in children. However, pharmacological treatments involve daily use of eye drops in children. The effectiveness and safety of these over extended years of use has not been examined. Current optical treatments with spectacle and/or contact lenses have shown only limited slowing of myopia progression. Compliance: actually wearing the contacts or using the eye drops, has been a problem; so has drop-out (stopping treatment).

There is a need in the art for non-invasive methods to encourage emmetropization and discourage myopia, especially in the developing eyes of children.

US 2011/141434 and US 2010/053550 describe multi-tint coloured ophthalmic lenses. US 2012/010703 describes intraocular lenses having a visible-light selective transmissive zone.

### SUMMARY

In a first aspect, the present invention provides a lens as defined in claim 1. In a second aspect, the present invention provides a vision correction device as claimed in claim 5. The dependent claims set out features of certain embodiments of the aspects of the present invention.

A new design of multi-focal lens is disclosed where the different zones of the lenses have different color tints. A method is disclosed of altering the color filtering properties of the different focal zones of a multifocal contact or spectacle lens for myopia control. Multi-spectral multi-focal lenses should be readily manufacturable, as either contact lenses or spectacle lenses, and should also be readily tolerated by children (because the human perceptual visual system is remarkably tolerant of spatial mis-localization of color signals).

A method of improving emmetropization in an eye is described, said eye having a short-wavelength focal plane and a long-wavelength focal plane relatively farther from the cornea than the short-wavelength focal plane, the method comprising: adjusting the vision in the eye to achieve one or both of increasing the distance between the long-wavelength focal plane and the short wavelength focal plane; and positioning the short wavelength focal plane closer to the cornea than it would normally be located.

A method of reducing or eliminating the development of myopia in an eye of a subject is also described, said eye having a short-wavelength focal plane and a long-wavelength focal plane relatively farther from the cornea than the short-wavelength focal plane, the method comprising: adjusting the vision in the eye to achieve one or both of increasing the distance between the long-wavelength focal plane and the short wavelength focal plane; and positioning the short wavelength focal plane closer to the cornea than it would normally be located.

The vision correction device is configured to be worn by a human subject, the device comprising: a first focal zone of a more positive dioptric power and tinted to absorb relatively less visible light at the short end of the visible spectrum; and a second focal zone of a more negative dioptric power than the first focal zone, and tinted to absorb relatively more visible light at the short end of the spectrum than the first focal zone.

A method of improving emmetropization in an eye is also described, said eye having longitudinal chromatic aberration, so short-wavelengths focus closer to, and long-wavelengths focus relatively farther from the cornea, the method comprising: adjusting the vision in the eye to achieve one or both of increasing the distance between the long-wavelength focal plane and the short wavelength focal plane; and positioning the short wavelength focal plane closer to the cornea than it would normally be located.

A vision correction device is provided that is configured to be worn by a human subject, the device comprising: a first focal zone that provides a clear image on the fovea in myopes; a second focal zone of a more positive dioptric power and tinted to absorb relatively less visible light at the short end of the visible spectrum compared to the first focal zone; and a third focal zone of a more negative dioptric power than the first focal zone, and tinted to absorb relatively more visible light at the short end of the spectrum than the first focal zone.

A vision correction device is provided that is configured to be worn by a human subject, the device comprising: a first zone that absorbs relatively less visible light at the short end of the visible spectrum; and a second focal zone that absorbs relatively more visible light at the short end of the spectrum than the first focal zone and configured to diffuse visible light.

The above presents a simplified summary in order to provide a basic understanding of some aspects of the claimed subject matter. This summary is not an extensive overview. It is not intended to identify key or critical elements or to delineate the scope of the claimed subject matter. Its sole purpose is to present some concepts in a simplified form as a prelude to the more detailed description that is presented later.

### BRIEF DESCRIPTION OF THE DRAWINGS

FIG. 1. Illustration of an emmetropic eye.
FIG. 2. FIG. 2A shows a hyperopic eye. FIG. 2B shows a myopic eye.
FIG. 3. Normalized cone absorbance in in an animal model, tree shrew, with "net" SWS absorbance adjusted for the optical filtering properties of the ocular tissues. The SWS cones (dotted line) have an absorbance peak at the blue end of the spectrum (peak, 428 nm) and are insensitive to wavelengths longer than about 550 nm. The LWS cones (solid line) have a broader absorption spectrum with a peak at 555 nm.
FIG. 4. FIGS. 4A and 4B illustrate focal points in the eye. FIG. 4A illustrates blue focal points in the eye. FIG. 4B illustrates red focal points in the eye.
FIG. 5. Illustration of wavelength signals to the emmetropization mechanism. FIG. 5A shows a hyperopic eye where the blue wavelengths (solid lines) are in focus, and the red wavelengths (dashed lines) are out of focus, a signal that the eye is too short. FIG. 5B shows a myopic eye where the red wavelengths (dashed lines) are in focus and the blue wavelengths (solid lines) are out of focus, a signal that the eye is too long.
FIG. 6. Front view of two embodiments of a multi-focal multi-spectral lens in 6A and 6B. There are different zones with different optical powers, and these different zones also have different color tints. "0" indicates a zone with the distance correction to provide best corrected acuity.
FIG. 7. FIG. 7A shows the normalized cone absorbance in tree shrews. FIG. 7B illustrates normalized intensity profiles of narrow-band red (solid line) and narrow-band blue (dashed line) LEDs, of the type that have been commonly used in experiments on tree shrews. The red LEDs (solid line) stimulate only the LWS cones, but the blue LEDs (dashed line) stimulate both SWS and LWS cones because the absorbance profile of the LWS cones extends into the blue end of the spectrum.

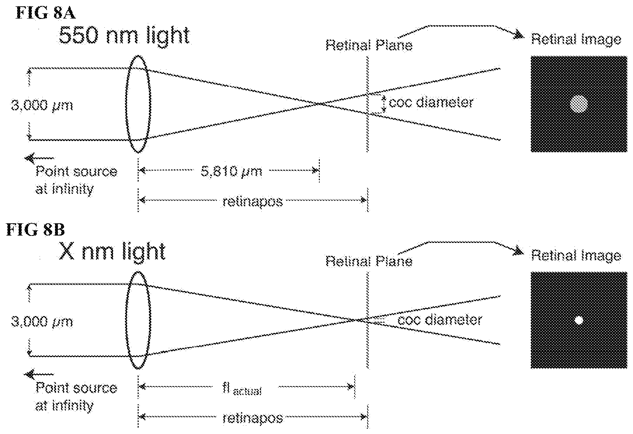

FIG. 8. Schematic models of the calculation of the retinal circle of confusion produced by a point source at optical infinity for two different wavelength in an eye with a fixed retinal location with an assumed pupil diameter of 3000 µm. FIG. 8A, illustrates how light of 550 nm is focused 5810 µm behind the posterior principal plane. In FIG. 8A, the retinal plane is behind the point of optimal focus (myopic defocus) so the retinal image is not a point, but an extended disk whose diameter is the circle of confusion. In FIG. 8B, the retina is located at the same position as in FIG. 8A, but the light is of a longer wavelength. As a result of LCA, the focal plane is farther from the posterior principal plane, resulting in a different-sized circle of confusion.

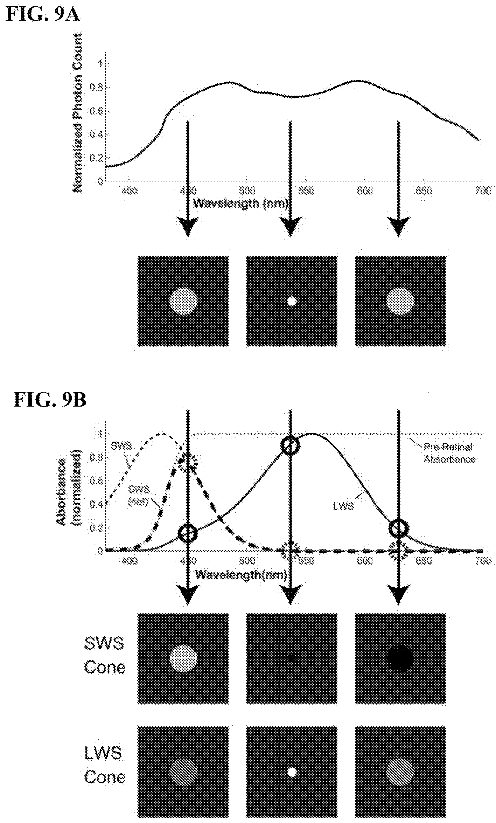

FIG. 9. Schematic models of how the circle of confusion at each wavelength can be converted to a blur disc as detected by SWS and LWS cones. In FIG. 9A, for a series of exemplary wavelengths in 10 nm increments from 380 to 700 nm, the diameter of the circle of confusion can be calculated as illustrated in FIGS. 9A and 9B. Then the intensity of the light within each blur disc can be calculated as the normalized photon count of the light spectrum at that wavelength, divided by the area of the blur disk. In FIG. 9B, at each wavelength, the value of absorbance can be determined separately for the SWS and the LWS cones, and this can be used to scale the effective intensity (photon catch) of the light within the blur disks. The result is two separate series of blur disks, one for the SWS cones and one for the LWS cones.

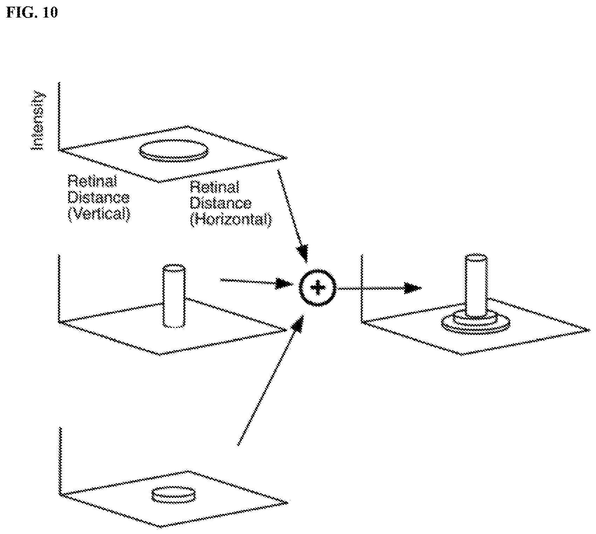

FIG. 10. Schematic model of how the blur discs for each wavelength are combined to form a single "point spread function." The graphs to the left represent three blur discs as shown at the bottom of FIG. 9B, but in this case drawn as surface plots where the horizontal and vertical position across the retina in microns lie in the horizontal plane of the graph, and the height of the surface represents the effective intensity. These blur disks at all wavelengths are summed, and provide a composite point spread function as illustrated on the right. Because this simplified schematic uses only three wavelengths and three blur disks, the composite point spread function has a stepped appearance. Summing over all wavelengths would produce a smooth point spread function for the SWS cones and another for the LWS cones.

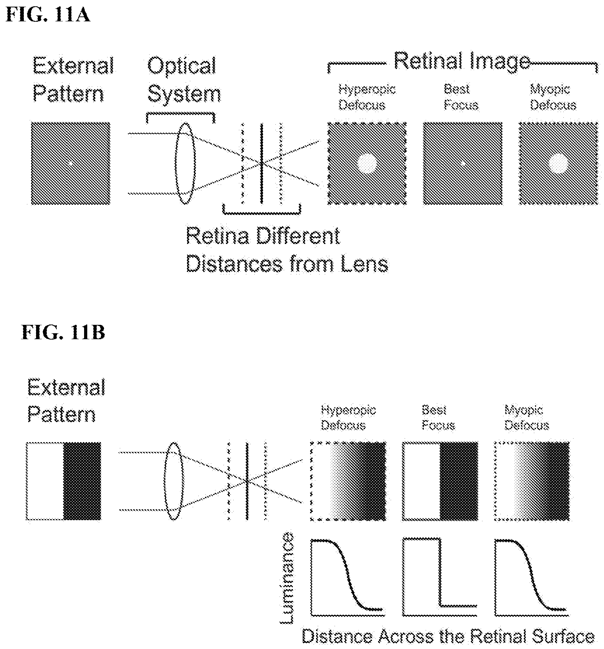

FIG. 11. Schematic examples of going from the response of the optical system to a point source to the response of the optical system to an extended edge. In FIG. 11A the external pattern is a white dot on a gray background. The retina is located at different distances from the equivalent lens. Emmetropization works by changing the elongation of the eye thus altering the distance of the retina from the optics. FIG 11A shows the different retinal images created by the retina being different distances from the lens. In FIG. 11B the external pattern is a sharp edge between a dark and a light region. The retinal images created by the pattern in FIG. 11B, which are the edge spread functions, are shown on the right. These can be calculated as the convolution of the point spread function with the external image. Below the retinal images are the profiles of illuminance across the retina as a function of blur, measured at right angles to the edge in the external pattern.

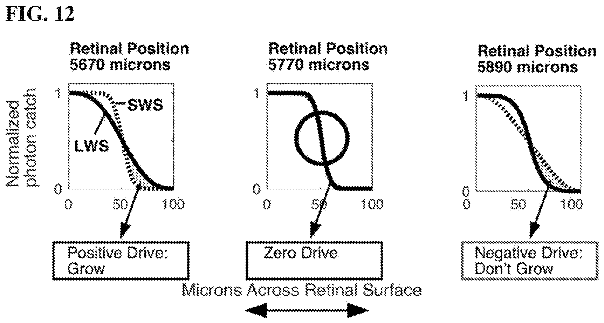

FIG. 12. Computation of the spectral drive. At each position of the retina relative to the optics, the luminance profiles are calculated for a step edge (as illustrated in FIG. 11) for both the SWS and LWS cones. The "spectral drive" is defined as the area between the dashed line and solid line curves to the right of the midpoint as a signed quantification of the difference between the SWS and LWS responses to a step edge. When the spectral drive is positive, this is a signal that the eye is too short and needs to grow longer. When the spectral drive is negative, this is a signal that the eye is too long and should restrain its growth.

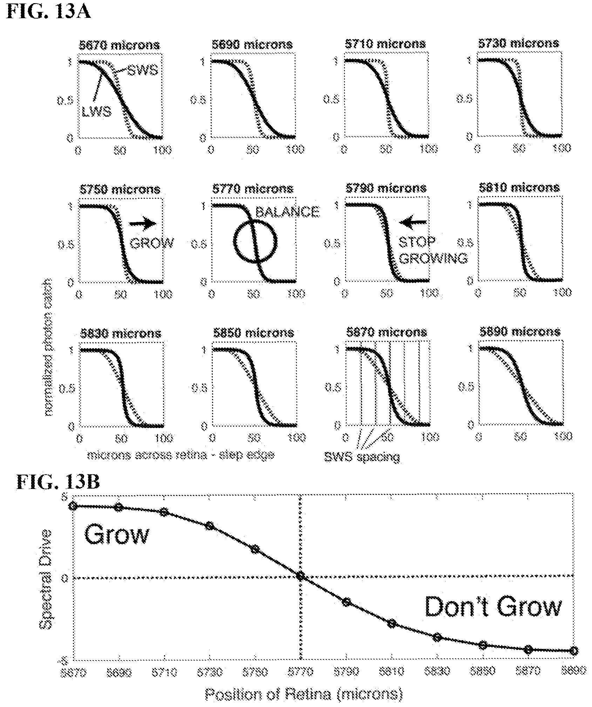

FIG. 13. FIG. 13A illustrates effective illuminance profiles on the retina of a light-dark edge in broadband (white) light as detected by the SWS cone array (dashed lines) and LWS cone array (solid lines) when the retina is located at different distances from the posterior nodal point. The Y-axis is the (normalized) illuminance on the retina. The X-axis is the distance across the retina in micrometers. The edge has high intensity from location 0 to 50 and low intensity from location 50 to 100. A more sloped profile indicates the image is more blurred on the retina. A steeper profile indicates better focus. The circle denotes a balanced retinal location where the profile for the SWS and LWS cone arrays have nearly the same slope (and the curves largely superimpose). The subplot on the bottom row second from the right indicates the approximate retinal separation of the SWS cones across the surface of the retina. FIG. 13B illustrates spectral drive as a function of retinal position. The vertical dotted line represents the retinal position where the SWS and LWS cone arrays would experience essentially identical image statistics.

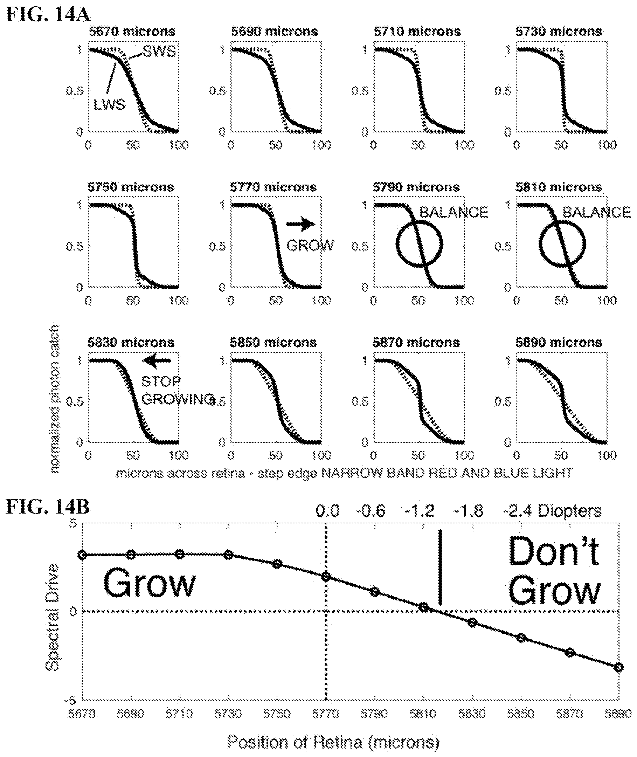

FIG. 14. Illustration of effective illuminance profiles on the retina of a narrow-band blue light (dashed line) and narrow-band red light (solid line). FIG. 14A illustrates results arranged as in FIG. 13, but with an illuminant consisting of narrow-band blue light (dashed line) and narrow-band red light (solid line). FIG. 14B illustrates spectral drive, arranged as in FIG. 13B. The point of balance where the spectral drive is zero has been shifted to approximately-1.4 D myopic relative to the case in white light (vertical dotted line), although the drive function has also been overall reduced in magnitude as well.
FIG. 15. Illustration of the spectral drive for narrow band red light.
FIG. 16. Illustration of the spectral drive for narrow band blue light.
FIG. 17. Illustration of the spectral drive for narrow band green and narrow band blue light.
FIG. 18. Illustration of the spectral drive in response to a compact fluorescent bulb.
FIG. 19. Illustration of the spectral drive using as an illuminant the screen of an iMac computer set to all white.
FIG. 20. Illustration of the spectral drive functions of the embodiments of the lens shown in FIG. 6A and 6B.
FIG. 21. Illustration of blurring of a natural grayscale image at differing retinal locations as sampled the SWS and LWS in tree shrews.
FIG. 22. Illustration of normalized power as a function of spatial frequency as the position of the retina is varied. The dotted lines indicate the SWS cone array and the solid lines indicate the LWS cone array.

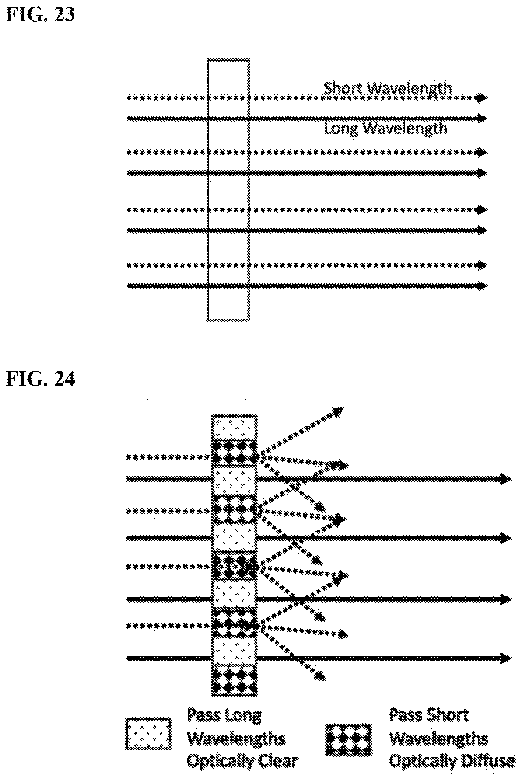

FIG. 23. Illustration of standard lens that is clear for all wavelengths of light.
FIG. 24. Illustration of multispectral multizone lens that is diffusive for short wavelengths of light and clear for longer wavelengths.

### DETAILED DESCRIPTION

### Definitions

Unless otherwise defined, all terms (including technical and scientific terms) used herein have the same meaning as commonly understood by one of ordinary skill in the art of this disclosure. It will be further understood that terms, such as those defined in commonly used dictionaries, should be interpreted as having a meaning that is consistent with their meaning in the context of the specification and should not be interpreted in an idealized or overly formal sense unless expressly so defined herein. Well known functions or constructions may not be described in detail for brevity or clarity.

The terms "about" and "approximately" shall generally mean an acceptable degree of error or variation for the quantity measured given the nature or precision of the measurements. Typical, exemplary degrees of error or variation are within 20 percent (%), preferably within 10%, more preferably within 5%, and still more preferably within 1% of a given value or range of values. Numerical quantities given in this description are approximate unless stated otherwise, meaning that the term "about" or "approximately" can be inferred when not expressly stated.

The terminology used herein is for the purpose of describing particular embodiments only and is not intended to be limiting. As used herein, the singular forms "a", "an" and "the" are intended to include the plural forms as well, unless the context clearly indicates otherwise.

The terms "first", "second", and the like are used herein to describe various features or elements, but these features or elements should not be limited by these terms. These terms are only used to distinguish one feature or element from another feature or element. Thus, a first feature or element discussed below could be termed a second feature or element, and similarly, a second feature or element discussed below could be termed a first feature or element without departing from the teachings of the present disclosure.

Terms such as "at least one of A and B" should be understood to mean "only A, only B, or both A and B." The same construction should be applied to longer list (e.g., "at least one of A, B, and C").

The term "consisting essentially of" means that, in addition to the recited elements, what is claimed may also contain other elements (steps, structures, ingredients, components, etc.) that do not adversely affect the operability of what is claimed for its intended purpose as stated in this disclosure. This term excludes such other elements that adversely affect the operability of what is claimed for its intended purpose as stated in this disclosure, even if such other elements might enhance the operability of what is claimed for some other purpose.

### Methods and Devices

A model has been developed of how the self-correcting emmetropization mechanism uses wavelength cues to control the refractive state of the human eye. Based on this model, lenses have been designed to prevent or slow myopia development in children.

From the results of studies in tree shrews (animals closely related to primates), a model has been developed of how the combination of the wavelengths of light and optical defocus regulate eye growth. This model predicts that using multifocal lenses where the more positive zones are tinted blue and the less positive (e.g., zero power) zones are tinted yellow or clear, will stabilize refractive development and prevent or slow myopia development in children.

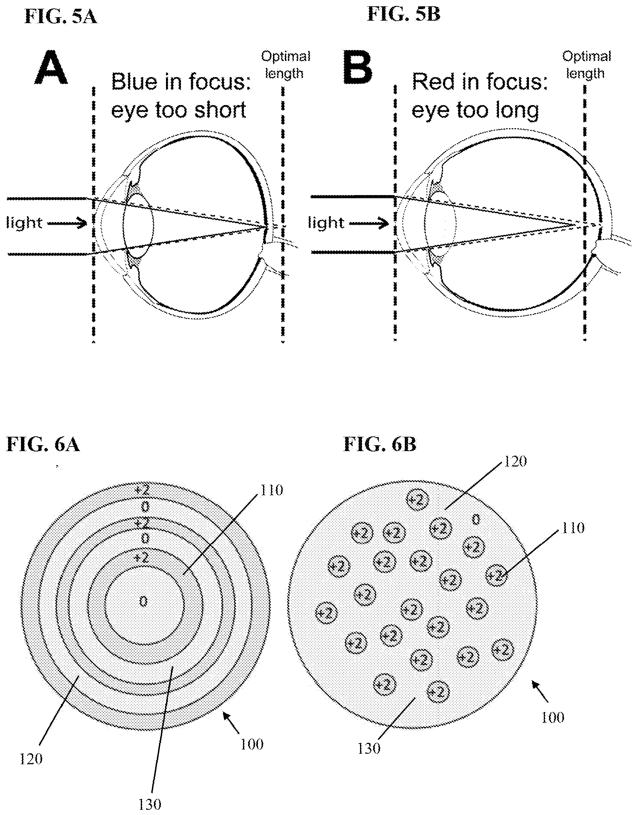

It has been found that the emmetropization mechanism uses some aspect of LCA to maintain the axial length within a narrow range. If the blue wavelengths are in focus (FIG. 5A), the red wavelengths are out of focus; this is a cue that the eye is too short and should increase its elongation rate. If the red wavelengths are in focus on the retina (blue out of focus, FIG. 5B), this is a cue that the growing eye has become too long for its own optics and needs to slow its normal postnatal axial elongation rate.

A method of influencing the development of the eye is provided. The method comprises adjusting the vision in the eye to either move a long-wavelength focal plane away from a short-wavelength focal plane in the eye (or vice versa), or to move the short wavelength focal plane closer to the cornea. Of course, the method could achieve both effects (increasing the distance between the two focal planes and moving the short wavelength focal plane closer to the cornea). The method could find various uses. Some embodiments of the method may be used to improve emmetropization; in some such embodiments the method may be performed on a subject in need of improvement of emmetropization. Some embodiments of the method may be used to reduce or eliminate the development of myopia in an eye of the subject. In such embodiments the method may be performed on a subject in need of such reduction or elimination of the development of myopia.

The two focal planes (short wavelength and long wavelength) are defined by the relative wavelengths of light that form a focused image on each (i.e., the wavelength at the short focal plane is shorter than the wavelength at the long focal plane). In some embodiments of the method the shorter wavelength is somewhere in the range of green to blue. In further embodiments of the method the longer wavelength is somewhere in the range of green to red. In further embodiments, the longer wavelength is 560 nm, 570 nm, 580 nm, 590 nm, 600 nm, 610 nm, 620 nm, 630 nm, 640 nm, 650 nm, 660 nm, 670 nm, 680 nm, 690 nm, 700 nm, 710 nm, 720 nm, 730 nm, 740 nm, at least any of the foregoing values, or a range between any two of the foregoing values. In further embodiments, the shorter wavelength is 550 nm, 540 nm, 530 nm, 520 nm, 510 nm, 500 nm, 490 nm, 480 nm, 470 nm, 460 nm, 450 nm, 440 nm, 430 nm, 420 nm, 410 nm, 400 nm, 390 nm, 380 nm, up to any of the foregoing values, or a range between any two of the foregoing values. In still further embodiments, the short-wavelength focal plane is predominantly blue. In still further embodiments, the long-wavelength focal plane is predominantly red.

The locations of the focal planes may be varied to achieve various desired effects. In a specific embodiment the long-wavelength focal plane is in focus on the retina. This is believed to encourage proper emmetropization and avoid the development of myopia.

A vision correction device 100 is disclosed that works by the same principles. It may be configured to be worn by an animal subject, including a human subject. The device 100 comprises two zones of different dioptric power and of different tints. A first focal zone 110 may be present of a more positive dioptric power and tinted to absorb relatively less visible light at the short end of the visible spectrum; and a second focal zone 120 may be present of a more negative dioptric power than the first focal zone 110, and tinted to absorb relatively more visible light at the short end of the spectrum than the first focal zone 110.

FIGS. 6A and 6B illustrate two embodiments of the device 100. A normal single-power lens has the same optical power across its entire surface. A multi-focal lens has alternating zones with different optical powers (that is, with different focal lengths). While not wishing to be bound by a given hypothesis, it is expected that when light is focused on the retina, the effects of these different zones will merge (the subject will not notice the focal patterns of the rings) and it will be as if there is a single lens that is simultaneously focusing light at two locations in space. If the positive zones are tinted bluer than the plano (or lower power) zones, the apparent amount of LCA signal should increase, and bias the growth of the eye away from myopia. Simulations suggest that this effect should be more powerful than any change in the color spectrum of light with just a single-focus lens.

In FIG. 6 the zones are presented as either concentric rings (6A) and as separate small round zones (6B), although the zones may be of other shapes. In the illustrated embodiment there is a difference in optical power between the zones. For some patients the base zones could be zero optical power, and the plus zones some value greater than zero. For other patients, the base zone could have an optical power different from zero, if the plus zones are greater than this. For example, the base zones could be -1 D and the plus zones could be +1 D.

In embodiment of the device 100 in which the subject has myopia, the dioptric power of the second focal zone 120 may be sufficient to correct the myopia. The dioptric power differential in some embodiments is at least +0.25 (i.e., the first focal zone's dioptric power is at least +0.25 diopters greater than the second focal zone's dioptric power). In further embodiments of the device 100 the differential is about +0.5 to +3.0. In a specific embodiment of the device 100 the differential is about +2.0.

The first focal zone 110 may be tinted to absorb relatively less visible light than the second focal zone 120 below a certain "spectral cutoff" wavelength but absorb relatively more visible light than the second focal zone 120 above the cutoff wavelength. In some embodiments the spectral cutoff is equal to or less than a point between 420 nm and 560 nm. The differential tinting between the focal zones can be manifest in various color patterns. In some embodiments the first focal zone 110 is tinted blue. In some embodiments the second focal zone 120 is tinted clear or yellow. The focal zones may have various geometric patterns. In a preferred embodiment the first focal zone 110 is either circular or annular, and the second focal zone 120 is either circular or annular and is concentric with the first focal zone 110 (FIG. 6A). In another preferred embodiment one of the focal zones comprises multiple spots on the device 100, and the other focal zone makes up the interstitial space between them or the "background" (FIG. 6B).

Further embodiments of the device 100 may comprise at least one additional focal zone 130, the additional focal zone 130 being about equal to the first focal zone 110 or the second focal zone 120 in tint and dioptric power. More focal zones may be present, each being about equal in tint and dioptric power to either: the first focal zone 110 or the second focal zone 120. The multiple additional zones may be placed in an alternating pattern between zones equal in tint and dioptric power to the first focal zone 110 and zones equal in tint and dioptric power to the second focal zone 120.

In an alternative embodiment of the device 100, one of the zones diffuses transmitted light, and has a transmission spectrum that is relatively shorter than the other. Some such embodiments of the device 100 comprise a first zone 110 that passes wavelengths longer than a cutoff value and are optically clear (not diffusive); and a second zone 120 that passes wavelengths shorter than the cut value and degrade the image (e.g., by diffusing transmitted light). The spectral cutoff point may be any that is disclosed above as suitable for use in other embodiments of the device 100. A further embodiment comprises an optically clear zone tinted or otherwise filtered to pass longer wavelengths, and an optically diffuse zone tinted or otherwise filtered to pass shorter wavelengths. A still further embodiment comprises an optically clear zone having no color filtering or tinting; and an optically diffuse zone filtered or tinted to pass short wavelengths. A still further embodiment comprises an optically clear zone filtered or tinted to pass long wavelengths; and an optically diffuse zone having no color filtering or tinting. These variants are expected to achieve relatively high retinal image contrast for long wavelengths, but relatively reduced retinal image contrast for short wavelengths. It is believed this will be interpreted by the retina as a sign that the eye is too long and that it should stop growing (i.e., it would be anti-myopiagenic). These variants are expected to have the advantages of ease of production and effectiveness over a large range of defocus. In some embodiments of the method the shorter wavelength is somewhere in the range of green to blue. In further embodiments of the method the longer wavelength is somewhere in the range of green to red. In further embodiments, the longer wavelength is 560 nm, 570 nm, 580 nm, 590 nm, 600 nm, 610 nm, 620 nm, 630 nm, 640 nm, 650 nm, 660 nm, 670 nm, 680 nm, 690 nm, 700 nm, 710 nm, 720 nm, 730 nm, 740 nm, at least any of the foregoing values, or a range between any two of the foregoing values. In further embodiments, the shorter wavelength is 550 nm, 540 nm, 530 nm, 520 nm, 510 nm, 500 nm, 490 nm, 480 nm, 470 nm, 460 nm, 450 nm, 440 nm, 430 nm, 420 nm, 410 nm, 400 nm, 390 nm, 380 nm, up to any of the foregoing values, or a range between any two of the foregoing values. In still further embodiments, the short-wavelength focal plane is predominantly blue. In still further embodiments, the long-wavelength focal plane is predominantly red.

Embodiments of the multi-focal multi-spectral lenses may be effective, safe for long-term use, non-invasive, simple to use (promoting compliance with treatment) and/or combinable with other anti-myopia treatments.

### Prophetic Example

The claimed subject matter can be further understood by reference to the following prophetic example.

A feedback mechanism operates in growing post-natal eyes that uses optical cues to regulate the eye's axial elongation rate so as to achieve focus by matching the location of the retina to the focal plane, a process termed emmetropization. It is believed that refractive error contains the cues that guide the mechanism. The target of the emmetropization mechanism is minimal defocus (actually, low hyperopia easily cleared with accommodation). Hyperopic defocus (retina closer to the cornea than the focal plane) creates retinal signals (a "drive") that increases the axial elongation rate, moving the retina to where light is in focus. Myopic defocus (retina behind the focal plane) produces a drive to slow axial elongation so that the maturing optics move the focal plane to the retina. When the refractive state reaches the target, the drive to increase or decrease axial elongation is zero.

The emmetropization mechanism evolved and normally operates in broadband ("white") light where all wavelengths are present across the visible spectrum (400 - 700 nm). In broadband light, many cues are present in a defocused image that potentially can provide the drive that generates retinal signals used to modulate axial elongation. For example, in a defocused eye, image contrast on the retina is reduced. The retinal image produced by a sharp light-dark edge becomes a more gradual change from higher to lower illuminance across the retina. Other cues, such as high spatial frequencies, higher order-aberrations (astigmatism, coma, etc.) and other possible cues are also altered. The specific optical cues used by the emmetropization mechanism share the basic premise that the retina doesn't specifically detect "defocus"; rather it detects changes in the "image statistics" (such as image contrast) across the retinal surface that are produced by defocus.

Another optical cue produced by defocused images involves LCA. Vertebrate eyes have significant LCA: long wavelengths focus farther away from the cornea than do shorter wavelengths, generally on the order of 2 to 3 Diopters (D) across the visible range. Therefore, when longer wavelengths are in better relative focus than shorter wavelengths (an indication that the eye is longer than optimal), this may provide a signal that the eye is too long and generate retinal signals that restrain axial elongation. If shorter wavelengths are in better focus than long wavelengths, this may lead to retinal signals that increase axial elongation.

In a direct assessment to determine if LCA cues are important for emmetropization, chicks were exposed to simulations of the chromatic signals expected from hyperopic and myopic defocus, and it was found that the eyes could interpret these chromatic signals appropriately. Another way to assess if LCA provides important cues for the emmetropization mechanism is to place young animals in an environment where there is no LCA by housing them in narrow band illumination, so that it is impossible to compare image statistics at different wavelengths. If LCA cues are important, removing them should impair the ability of the emmetropization mechanism to function. Although there is a high degree of variability in the results of these studies by species and the specific wavelengths used, the evidence indicates that emmetropization is disrupted in narrow band- width light in tree shrews, non-human primates, chicks, guinea pigs and mice. Studies suggest that the LCA cues present in broadband lighting conditions are not only important for normal operation of the emmetropization mechanism, but also are essential for it to function properly. When LCA cues are removed, the emmetropization mechanism is unable to utilize other, remaining, defocus-related cues to maintain or achieve emmetropia.

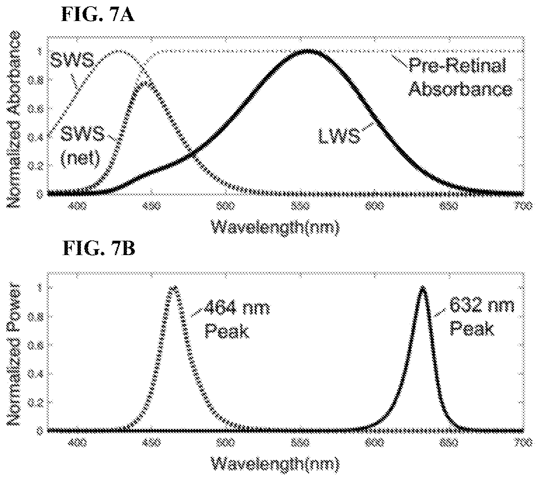

Tree shrews, like most mammals, are dichromats. Tree shrew retinas contain a cone photoreceptor type sensitive to shorter wavelengths (SWS - encoded by the OPN1SW gene, peak sensitivity in tree shrews is approximately 428 nm) and another cone type sensitive to longer wavelengths (LWS - encoded by the OPN1LW gene, peak sensitivity is approximately 555 nm) (FIG. 7A). In photopic lighting, rods should saturate, and combined with the low spatial acuity of the rod system, it seems unlikely that the sparse rods in tree shrews contribute significantly to emmetropization. Therefore, it is possible that the only information about focus that the emmetropization mechanism can access is the spatial pattern of activation across the retina as detected by these two classes of cones. In addition, the only information about LCA that the emmetropization system can access is the difference in the activation patterns of these two classes of cones.

Without wishing to be bound by any hypothetical model, it is proposed that the two arrays of cone photoreceptors independently detect "image sharpness" and have opponent effects on axial growth of the eye. If the SWS cone array detects sharper images on the retina than the LWS system, post-receptoral retinal circuitry then signals for increased axial growth (a positive drive). If the LWS cone array detects relatively sharper images on the retina, the post-receptoral circuitry then signals for slower axial growth (a negative drive).

A model is provided of how the retinal image, as sensed separately by the SWS and LWS cones, varies as a function of both defocus and the spectrum of ambient light. It can be determined if the difference between the SWS and LWS images can plausibly distinguish between hyperopic and myopic defocus over a physiological range of values, given the known spacing of the SWS and LWS cone arrays in tree shrews, and predictions can be made about how changes in the shape of the spectrum of ambient light could affect emmetropization.

The development and implementation of the model involves several steps. For a given spectrum of light, and a given position of the retina relative to the optics:
(1) Calculate the size of the circular disk of light ("blur disk") created by a single point at optical infinity, for all wavelengths in 10 nm steps.
(2) At each wavelength, weight the intensities of the bur disks by the intensity of the light, the area of the blur disks, and the absorbance of both the SWS and LWS cones.
(3) Combine all the blur disks to produce a separate "point spread function" for the SWS and the LWS cones.
(4) Use the point spread functions to calculate the effective spatial luminance profile of the retina, in response to a black/white edge, for the SWS and for the LWS cones.
(5) Use these luminance profiles to calculate a single number, a spectral drive, which reflects the difference in image sharpness between the SWS and LWS cones and the direction of the effect on axial growth (increase or decrease).
   The model can then be applied in several different lighting conditions.
(6) Use the point spread functions to calculate the effective spatial luminance profiles on the retina, in response to a naturalistic grayscale image, for the SWS and LWS cones.
(7) In addition, the results of [6] are used to calculate the mean spatial frequency distribution of the responses of the SWS and LWS cones to an entire naturalistic grayscale image.

Because the emmetropization mechanism acts by changing the axial length of the eye (and thereby the position of the retina) and does not appear to alter the optics of the eye, in the chosen model the optics are held fixed and different amounts of defocus (blur conditions) are simulated by changing the location of the retina with respect to the optimal focus point of a 550 nm light. Retinal positions closer to the posterior principal plane simulate hyperopic defocus; locations farther away from the posterior principal plane simulate myopic defocus.
In the model, the effects of diffraction and higher-order monochromatic aberration are ignored. All referenced simulations use custom routines written in Matlab version R2017b.
(1) Calculate the size of the circular disk of light ("blur disk") created by a single point at optical infinity, for all wavelengths in 10 nm steps.

As illustrated in FIG. 8A, the assumed effective posterior focal length of the tree shrew eye is 5.81 mm (5810 µm), with a pupil diameter of 3.0 mm (3000 µm). A single lens to represent the optics of the cornea and crystalline lens of the eye can be used and does not include any accommodation. It may be assumed that all source objects are at optical infinity and that light of wavelength 550 nm at optical infinity is in emmetropia at 5810 µm behind the posterior principal plane.

In the model, it can be assumed that tree shrew eyes have 2.77 Diopters (D) of LCA between 428 and 555 nm and that the point of best focus changes linearly with wavelength. Although not strictly true, the curves of LCA versus wavelength are smoothly monotonic across the range of visible light, so it was taken as a simplifying assumption. Thus, the point of best focus shifts away from the posterior principal plane by 8.7 µm (approximately 0.26 D in a tree shrew eye) for every 10 nm increase in the wavelength of light.${Fl}_{actual} = 5810 + \left({λ}_{550}\right) ∗ 0.87$ where Fl_{actual} is the actual focal length at a wavelength of λ nm. To model the image of a light-dark edge on the retina, the effects on image focus of changing the wavelength across the spectrums need to be calculated at each retinal position. As illustrated in FIGS. 9A and 9B, when the optical system images a point source on the retina, most wavelengths will not be in focus. Each defocused wavelength will produce a disk of relatively uniform intensity on the retina, that is bounded by the "circle of confusion" or "coc". Using similar triangles, the size of the circle of confusion of the image from a point source of a given wavelength at optical infinity in an eye with a particular retinal location will be given as: $coc = abs \left(\left(\left({fl}_{actual}-retinapos\right){/ fl}_{actual}\right)∗3000\right)$ where coc is the diameter of the circle of confusion, and retinapos is the position of the retina in nm relative to the optics. The pupil diameter is assumed to be 3,000 µm.

(2) At each wavelength, weight the intensities of the blur disks by the intensity of the light, the area of the blur disks, and the absorbance of both the SWS and LWS cones.

Assuming that, at each wavelength, the coc defines a circular "blur disc" of uniform intensity (FIGS. 10A and 10B). The intensity within the blur disc scales with the reciprocal of the area of the blur disc because the same amount of light is spread across a disc of larger, or smaller, area. In the model, to avoid infinities in the calculations a minimal coc diameter of 2 µm should be used.

As illustrated in FIG. 9A, the calculated intensity of the blur discs at different wavelengths can be converted individually for the SWS and the LWS cones. As photoreceptors are activated by photons and not the total amount of physical energy in light, the power spectrum (in µW/cm²/nm) can be converted to normalized photon counts by multiplying by the wavelength. In this regime, photon catch should be nearly linear with photoreceptor outer segment absorbance. As illustrated schematically in FIGS. 9A and 9B, the diameter of the coc can also then be calculated. At each of the three exemplary wavelengths shown in FIGS. 9A and 9B, a matrix of dimension 101 × 101 units is created, where each unit represented 1 µm of distance across the retina. Each matrix can be initialized to contain all zeros, representing no light. A solid filled-in blur disc in the middle of each matrix can be created with a diameter equal to the coc. The intensity within the blur disc is equal to the photon count at that wavelength, divided by the area of the circle. This provides the physical distribution and relative photon intensities across the retinal surface that is produced by the image of a point source at each of the three wavelengths.

As illustrated in FIG. 9B the spatial extent and effective relative intensity of light on the retina as sampled by the SWS and by the LWS cones at each of the three example wavelengths for each blur disc can be calculated. The light intensity within each disc can be weighted by the cone absorbance function at that wavelength to provide the spatial extent and effective relative intensity of light on the retina for the SWs and for the LWS cones. In the model, this may be calculated in 10 nm steps for wavelengths from 380 to 780 nm.

(3) Combine all of the blur disks to produce a separate "point spread function" for the SWS and the LWS cones.

As illustrated in FIG. 10, a series of blur discs (each produced at a different wavelength) can be combined into a single "point spread function". The point spread function is the effective pattern of illuminance across the surface of the retina, for a specific wavelength and retinal position, as sampled by either the SWS or LWS array of cones. As any visual image can be decomposed into a large number of points, these points spread functions can predict the pattern of activity of the SWS and LWS cone populations for any image. The point-spread functions can also be referred to as the 2D impulse responses, or the 2D kernels, of the optical system. These two spatial patterns of activity - one for SWS and the other for LWS cones - are all that the neural retina has to operate on (at least as regards cone signals). The said two spatial patterns of activity define the limits of the information that it is possible for subsequent retinal neurons to extract from an image.

(4) Use the point spread functions to calculate the effective spatial luminance profile on the retina, in response to a black/white edge, for the SWS and for the LWS cones.

Natural images are full of extended edges, and, unlike isolated points, these extended edges can be robustly detected by retinal neurons even when blurred. Emmetropization might not be specifically driven by extended edges, but a simplified visual stimulus can be used to gain insight into how different levels of hyperopic and myopic blur could be translated into different activation patterns of the SWS and LWS cone arrays. This process is schematized in FIGS. 13A and 13B. A cone point spread function with a luminance edge can be convolved to create the edge spread function. The effective luminance profile can be extracted across the retinal surface normal to the edge as detected by this cone class.

(5) Use these luminance profiles to calculate a single number, a spectral drive, which reflects the difference in image sharpness between the SWS and LWS cones and the direction of the effect length (increase or decrease).

The process can be repeated separately for the SWS and LWS cones, and for a range of retinal positions from hyperopic to myopic, as shown in FIG. 12. This process can provide a visual indication of how the SWS and LWS cones will respond to a light/dark edge when exposed to various amounts of hyperopic and myopic blur under a given illumination spectrum. As shown in FIG. 12, a single number, the "spectral drive," can be defined as the signed area difference between the SWS and LWS profiles to the right of the midline. An emmetropization system may not use this exact metric to evaluate chromatic defocus cues. It is likely that chromatic defocus cues are evaluated through some nonlinear combination of contrast across some range of spatial frequencies. It is also likely that emmetropization combines chromatic cues with others, such as monochromatic aberrations, temporal flicker, and absolute light levels. This metric is proposed as a first step to quantify the signal that the emmetropization mechanism extracts from chromatic cues to guide eye growth.

The blur profile for each cone type can be normalized to span the range between 0 and 1. It is established that cone photoreceptors can adapt to a wide range of light levels, and the post-receptoral retinal circuitry could also work to normalize the processing of these signals. It is unknown exactly how much the normalization of cone responses is or is not important for emmetropization, but using normalized responses can be a reasonable starting assumption.

The model may be applied to different artificial ambient lighting spectra, including, but not limited to, broad-spectrum "white" light, narrow band blue combined with narrow-band red, narrow-band red or narrow-band blue alone, limited-bandwidth green + blue, colony fluorescent light, the red + green + blue light from a computer screen, and a hypothetical multi-spectral multi-focal lens.

(6) Use the point spread functions to calculate the effective spatial luminance profiles on the retina, in response to a naturalistic grayscale image, for the SWS and LWS cones.

While natural images are dominated by lower spatial frequencies, it is understood that the real world consists of more than simple step edges. Therefore, the model should be extended to natural images. A black and white image can be convolved with the point spread functions for the SWS and LWS cones separately. This results in a model of the 2D spatial pattern of effective illuminance across the retina as sampled by the SWS and LWS cones. These images can be normalized to have the same minimum and mean value across the entire image. The radially averaged Fourier transform can be applied across these patterns, using the method derived from, and plotted the direction-averaged power as a function of spatial frequency. In the model, the possible effect of different color objects in the environment should be ignored, and a purely black and white world should be assumed. As most objects in the world are not brightly colored, and as the emmetropization system must average over a large number of image patches, an assumed black and white world is a reasonable approximation for this level of modeling.

(7) In addition, use the results of (6) to calculate the mean spatial frequency distribution of the responses of the SWS and LWS cones to an entire naturalistic grayscale image.

Although the activity of the retina that is important for perception and for the visual guidance of behavior is driven by what is on the retina moment-by-moment, emmetropization averages over a considerable period of time. Primates will typically make on the order of three saccades per second, and for retinal locations not on or near the fovea (which is most of the retina), any given patch of the retina will receive on the order of 10,000 random samplings of the visual world per hour. Tree shrews do not make large saccades, but they do routinely make head movements with similar frequency as primates make saccades, so the effect on retinal stimulation should be similar. Therefore, the effect of a complex naturalistic image on emmetropization, can be approximated by averaging the image statistics across the entire image.

FIGS. 14A and 14B illustrate the results of the model with a broadband ("white") illuminant that had an equal number of photons per nm. Each panel in FIG. 13A shows the illuminance profile of a sharp light-dark edge as a function of distance across the retina, orthogonal to the edge (FIGS. 12 and 13). Dashed lines are the normalized illuminance profiles as detected by the SWS cones. Solid lines are the profiles for the LWS cones. Each panel in FIG. 13A shows the SWS and LWS luminance profiles (FIG. 11) when the retina is located at a particular distance behind the posterior principal plane. The upper left panel (5670 µm), as shown in FIG. 13A, is an example of when the retina is close to the posterior principle plane, a condition of hyperopic defocus. Subsequent panels, of FIG. 13A, from left to right and from row to row show the profiles at retinal positions farther from the posterior principle plane, first reducing the hyperopia, passing through emmetropia at 5810 µm, where 550 nm light is focused on the retina (FIG. 8A) and then progressively more myopic. Each 20 µm step of retinal position between subplots represents approximately 0.6 D of optical power for a tree shrew.

As the retinal position is moved away from the posterior principle plane, the shape of the illuminance profiles changes. At the most hyperopic retinal position (5670 µm), the SWS profile has a steeper slope than the LWS illuminance profile, indicating that the light-dark edge was in sharper focus for the SWS cones. As the retina moves away from the posterior principle plane the slope of the SWS illuminance profile becomes lower, indicating that the edge was more blurred as viewed by the SWS cone array. In contrast, at locations farther away from the posterior principle plane, the slope of the LWS illuminance profile becomes steeper. The sharpest SWS profile (at 5730 µm) is sharper than the sharpest LWS profile (at 5810 µm) because the SWS cones have a relatively narrow bandwidth and the LWS cones have a much broader bandwidth, as illustrated in FIG. 7A. The subplot on the bottom row, second from the right, has vertical bars representing the approximately 18 µm spacing of the SWS cones across the surface of the retina. By inspection it is at least plausible that the difference in blur profiles between SWS and LWS cones could be resolved by the retina. FIG. 13B illustrates the spectral drive (as schematized in FIG. 12) as a function of retinal position.

FIG. 7B illustrates a spectrum consisting of two peaks, one at 464 nm (dashed line) and the other at 634 nm (solid line), with no intermediate wavelengths present. This spectrum spans a wide range of wavelengths, so it is not narrow band, but it is also not flat or continuous. FIG. 14A illustrates the SWS and LWS cone illuminance profiles calculated for this ambient illuminant. As in FIG. 13A, the illuminance profiles change with retinal distance: at hyperopic positions the SWS cones profile has a steeper slope than for the LWS cones. This gradually changes to a relatively steeper LWS profile as the retinal position in shifted to myopic defocus. In this illuminant there is an extended zone where there is only a small difference between SWS and LWS profiles. At retinal positions of 5790 µm and 5810 µm, the profiles are nearly identical, so the magnitude of the signal to emmetropization should be small. However, the point at which there would be a significant signal to stop growing could be shifted by approximately 40 to 60 µm myopic compared to the result in broadband light, which would be on the order of 1.2 to 1.8 D myopic relative to the situation in broadband light. The exact target would depend on the system's sensitivity to differences in SWS and LWS blur profiles: the overall magnitude of the spectral drive is reduced as well, so conceivably the emmetropization system might not be able to "home in" on precisely the same point of zero spectral drive. The model's prediction is qualitatively consistent with the results from a group of animals exposed to this illuminant that developed -1.9 ± 0.5 (stderr) D of myopia compared with animals raised in broadband colony lighting.

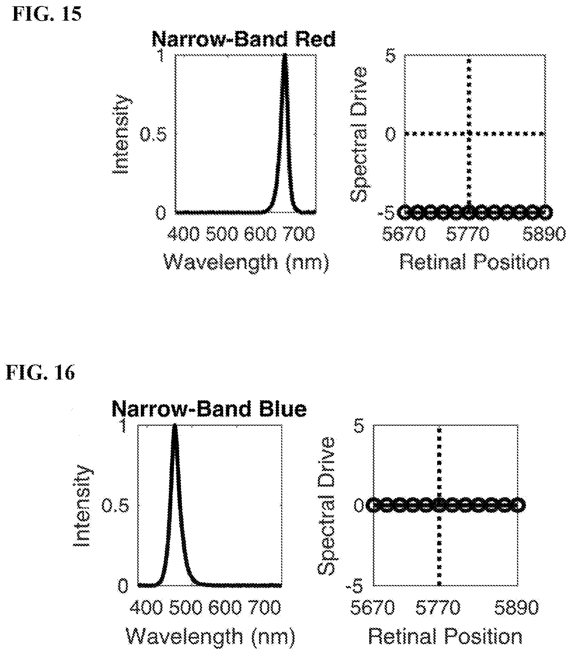

FIG. 15 illustrates the spectral drive for narrow-band red light. The spectral drive to this illuminant assumes that the absence of blue light is interpreted by emmetropization as zero blue contrast. In this case, the spectral drive would be strongly negative at all retinal positions, and emmetropization would be strongly biased towards hyperopia. This is consistent with the results of using narrow-band red light in tree shrews and non-human primates.

FIG. 16 illustrates the spectral drive for narrow-band blue light. Because blue light significantly excites both SWS and LWS cones, the blur profiles across the retinal surface would be identical for both cone classes, and the difference between the SWS and LWS profiles would therefore be zero at all levels of defocus. This would result in the feedback error signal being forced to zero regardless of the degree of defocus, and emmetropization would drift in response to other factors, which seems to be the case in tree shrews.

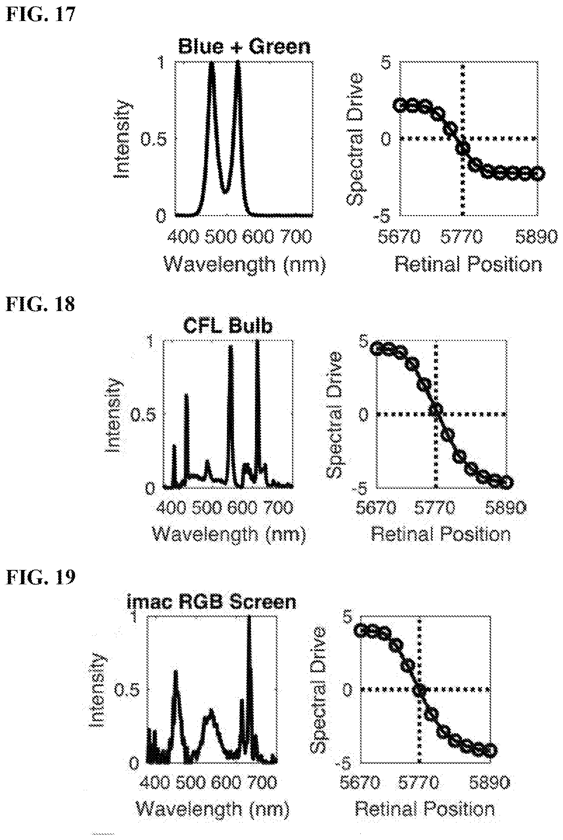

FIG. 17 illustrates the spectral drive in response to limited bandwidth light, in this case a combination of narrowband blue and narrowband green light. There is a spectral drive function that has essentially of the same shape as in broad-band white light. However, target is shifted slightly hyperopic and the magnitude of the drive is significantly reduced. Past a certain point, as the eye becomes too long, the magnitude of the drive function does not increase with increasing refractive error. This suggests that, if the maximum of the drive function falls below some threshold value, emmetropization might slowly drift away from emmetropia as the integrated visual cues across a day are not quite sufficient to bring the eye to emmetropia.

FIG. 18 illustrates the spectral drive in response to a compact fluorescent bulb (CFL), with a spectrum similar to that used in normal colony lighting. Even though the spectrum consists of jagged peaks, the spectral drive function is smooth and virtually identical to the one in broad-spectrum light. This is consistent with many decades of experience with tree shrews under this illuminant; they emmetropize perfectly well.

FIG. 19 illustrates the spectral drive using as an illuminant the screen of an iMac computer set to all white. The spectrum consists of three discrete peaks, but unlike the case in FIG. 18, the spectral drive is essentially identical to that found in broadband light.

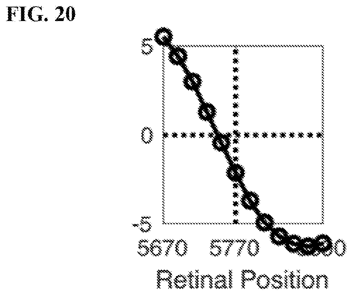

The disclosed simulations did not find any broad spectrum of light that would either significantly bias emmetropization towards hyperopia, or increase the magnitude of the drive. FIG. 20 shows the result of a simulation with a multifocal lens that has both plano and +2D zones. The plano zones are tinted so that they only pass 20% of the light below 500 nm. The +2D zones are tinted so that they only pass 20% of the light above 500 nm. The result of the proposed model is a spectral drive significantly biased towards hyperopia, and also of substantially greater drive magnitude. In effect, this optical system has artificially increased the magnitude of LCA and biased it to target a slightly hyperopic state.

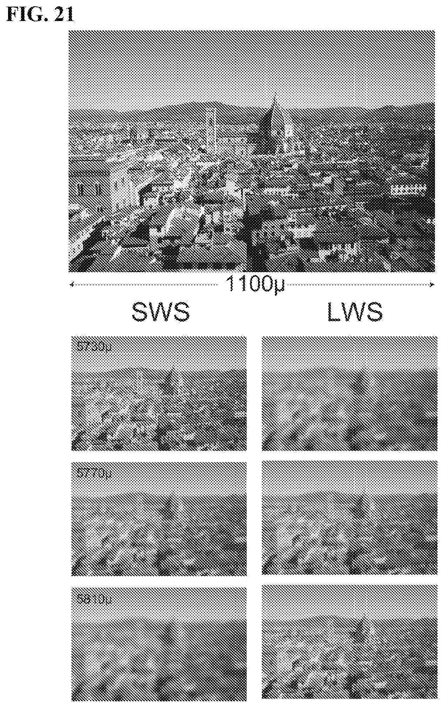

Although the visual world contains many abrupt luminance edges, it also contains complex luminance changes. FIG. 21 illustrates the result of calculations for how a black and white natural image (top) would be sampled by the SWS (left) and LWS cones (right) at a hyperopic retinal location (5730 µm), an intermediate (5770 µm), and a myopic (5810 µm) position. As illustrated in FIG. 21, at these extreme positions, the images, as viewed by the SWS and LWS cones clearly differ. If the emmetropization mechanism in tree shrews is comparing the spatial image statics as sampled by the SWS and LWS cone arrays, it would depend on if the SWS cone array had sufficient spatial resolution as to whether the SWS cones detect these difference and generate drive to guide axial elongation to the middle position.

Tree shrews have with a nominal visual behavioral acuity of approximately 2 to 3 cycles/degree presumably mediated by the array of LWS cones. The LWS cones have a typical inter-cone separation of approximately 6 µm across the retina, but the SWS cones have a relatively constant SWS to SWS cone spacing of 18 µm. Thus, the limiting factor for resolving differential image sharpness at long vs. short wavelengths, will be the spacing of the SWS cones. This spacing would give a spatial Nyquist frequency for the SWS array of approximately 3 cycles/degree. As illustrated in FIG. 13A bottom row second panel from the right, the SWS cone array has a spatial resolution that can plausibly differentiate physiologically relevant levels of blur.

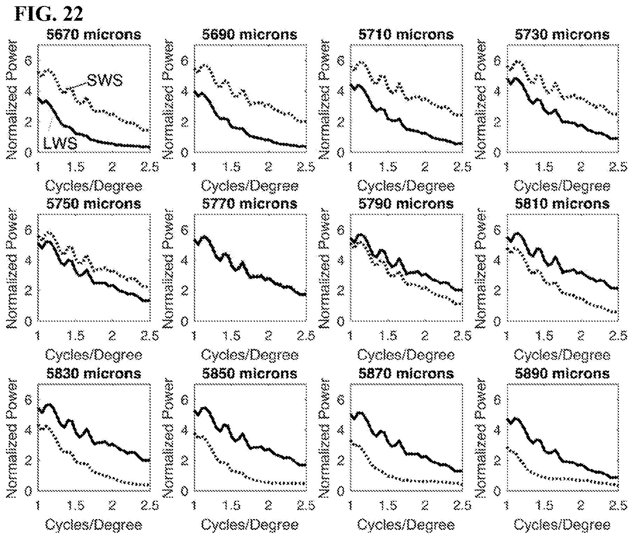

FIG. 22 shows the normalized power spectrum as a function of spatial frequency for the image shown in FIG. 21 for different retinal positions, and as sampled by the SWS and LWS cone arrays. In principal, myopic and hyperopic defocus could be determined by examining the relative power in the spatial frequency range of as low as one cycle per degree and higher - which is well within the visual acuity of tree shrews and even more within the range set by the SWS cones spacing. The relative activity in one set of cones could be several times higher than those in the other, in at least some frequency bands, which suggests that subsequent retinal circuitry could readily distinguish the differences.

That the emmetropization mechanism detects image contrast and adjusts axial growth of the eye to maximize image contrast is a familiar concept. A dual-detector spectral drive model was developed using data from the dichromatic mammal, tree shrew. In the disclosed model, image sharpness can be detected by two independent imaging arrays, comprised of the SWS and the LWS cones. In broadband lighting conditions, because of longitudinal chromatic aberration, the two imaging arrays cannot both simultaneously maximize image sharpness. If image sharpness (as detected by the SWS cone array contrast) is greater than that as detected by the LWS cone array, a drive is generated that increases axial growth. If image contrast is greater as detected by the LWS cone array, an opposing drive is generated that slows axial growth. The target is a retinal location where the image contrast is intermediate and an proximately equal in both cone arrays.

Although the emmetropization mechanism exists to achieve and maintain good focus, the model, does not use "optical defocus" as the primary cue. Instead, the model depends on the difference in the image statistics as sampled by the SWS and LWS cone arrays. Under a broadband spectrum of lighting, this mechanism efficiently homes in on good focus. However, when the spectrum of light is significantly altered, shifting the target of the spectral drive, the emmetropization mechanism can become maladaptive producing a stable refractive state that is different from emmetropia, despite defocus cues.

When the response to a monochromatic 2D image was modeled for a physiologically relevant range of defocus, it was be found, as illustrated in FIG. 22, that the spatial pattern on the surface of the retina could be detected by both cone arrays. Previous work has indicated that, even though the purpose of emmetropization is to maximize acuity for high spatial frequencies, emmetropization itself appears to be driven more strongly by the mid-range of spatial frequencies. The results of this model demonstrate that it is plausible for the emmetropization system to make use of LCA cues without requiring non-physiological levels of spatial acuity, and that it can also operate robustly across a range of optical blur.

According to the model, the emmetropization mechanism should be able to accurately use differential wavelength cues in all but the most distorted light spectra, as long as the spectra span a broad band of wavelengths and have more than two peaks. Spectra consisting of narrow band red and narrow band blue light together produce a target that is myopic, but we were unable to find a light spectrum (other than narrow band red) that could significantly either shift the target in the direction of hyperopia, or increase the magnitude of the drive signal. Simulations suggest such a result could only be achieved in broadband light by manipulating the effective magnitude of LCA, for example, by using multifocal lenses with different spectral filtering in the different optical zones (FIG. 21).

The model only examines information available at the level of the photoreceptors, and ignores the considerable processing that occurs as information passes through the bipolar, horizontal, amacrine and ganglion cells. However, the retinal circuitry cannot create information that is not present in the spatial pattern of light across the photoreceptors. The information available at the photoreceptor level, as modeled, appears to be sufficient to provide signals to subsequent retinal stages that account for the behavior of the emmetropization mechanism in both broadband and various narrow-band ambient lighting of differing peak wavelengths.

Given the evolutionary importance of in-focus images to survival, it is not surprising that defocus, as detected by the dual detector spectral drive model is not the only cue used by the emmetropization mechanism. When tree shrews and macaque monkeys housed in narrow-band red light have also worn plus-power (macaque) or minus power lenses (tree shrew), the lenses alter the refractive responses in the appropriate direction, increasing the hyperopia in macaques and increasing the myopia in tree shrews. These results emphasize that the emmetropization mechanism utilizes multiple cues related to defocus. In narrow-band light the spectral cues appear to be stronger than the defocus cues and prevent achieving or maintaining emmetropia.

Even if a dual detector spectral drive system guides emmetropization, it is not clear how the strength of the drive signal (Y-axis as shown in FIG. 14B) is used. In extreme cases, where drive is zero (blue illuminant) or strongly negative (red illuminant) there appears to be a strong impact on the emmetropization mechanism. However, it is currently unknown if the lower strength of the drive signal in the blue + green illuminant, as shown in FIG. 19, will lead to greater variability in the refractions of animals housed in this light over time. It may also be the case that, at least in humans, emmetropization does not home in on the point of exact balance between the image statistics of short and long wavelength cones, but some ratio that is biased towards the longer wavelengths. Nevertheless, for this level of modeling, the effect would be slight.

It is important to note that the spectra used to examine the effects of wavelength on emmetropization in the tree shrews used in the model were produced either by fluorescent lamps or by light emitting diodes, not by digital monitors. The effects of wavelength on emmetropization cannot be modeled using standard "red-green-blue" digital images because focus varies continuously with wavelength. For example, as regards a single photoreceptor, a dim light of a wavelength at the optimal frequency cannot be distinguished from a brighter light at a less optimal wavelength that produces the same photon catch. This is the basis of color metamerism, and is why the video display technology used in this model works with just red, green, and blue light emitting elements. However, as regards emmetropization, these two conditions are not equivalent, because the degree of focus will be different. Thus, an analysis of the effects of wavelength on emmetropization must integrate across all wavelengths, a procedure known as hyperspectral imaging.

Unlike tree shrews, many primates, including most humans, are trichromats, with middle wavelength sensitive (MWS) cones added to the SWS and LWS cones present in dichromatic species. However, it is suggested that the principles of the spectral drive model would apply in trichromatic species if the MWS and the LWS cone arrays both together provide a signal to the emmetropization mechanism that opposes the signal provided by the SWS cone array (similar to the blue-yellow interaction found in chromatically-sensitive retinal ganglion cells). The peak wavelength sensitivities for the MWS and LWS cones, in humans, are very close: 530 and 560 nm. These are far removed from the 420 nm peak for the human SWS cones. Also, the LCA curve is nonlinear; focus changes more rapidly with increasing wavelength at shorter than, at longer, wavelengths. In humans, the difference in where light is focused between the MWS and LWS cones is approximately 0.1 D. The difference in where light is in focus between the short wavelength versus the medium and long wavelength cones is approximately 1.0 and 1.1 D, respectively. Thus, there is relatively little difference in the information about focus available to the MWS in comparison to the LWS cones, but a substantial difference between the SWS short and either or both of the MWS and LWS cones. It is suggested that it is the difference between the image contrasts on the SWS system as compared to the longer (MWS & SWS) systems that is involved in emmetropization. This suggestion is supported by the fact that emmetropization occurs in many dichromatic species and in dichromatic humans. The evolution of trichromacy did not disrupt the emmetropization mechanism.

In humans high-acuity visual perception is mediated by the LM cone midget system in the fovea, but it has been demonstrated that emmetropization is controlled, or strongly influenced, by the peripheral visual field. In the peripheral retina, there is no midget system and L/M cones are much sparser than in the fovea. It may also be relevant that, as images are placed on differing retinal locations, from the central to the peripheral visual field, the ability of human subjects to discriminate long (yellow) versus short (blue) wavelengths is maintained, but the ability to discriminate green versus red is lost except perhaps for very large stimuli, making the periphery essentially dichromatic. These results of the model suggest that the red-green contrast may be less important for emmetropization than the blue-yellow. The way in which the emmetropization mechanism uses visual cues (which may not be conveyed to central structures) may not always match up with what is observed in centrally-mediated visual perception, but the model's findings still suggest that it is the long versus short wavelength comparison that is crucial for emmetropization, even in trichromatic primates. As long as the combined L + M cone mosaic is at least as spatially dense as the S cone mosaic, then according to the model, it is functionally irrelevant whether the L + M cones are or are not more densely spaced than the S cones.

The developed model, using an opponent dual-detector spectral drive system, utilizes longitudinal chromatic aberration to guide normal emmetropization in dichromatic tree shrews and perhaps in tri-chromatic species such as humans. The existence of a dual-detector mechanism could help to distinguish myopic from hyperopic defocus at the retinal level, and provides an explanation why continuous exposure to some narrow-band lighting conditions could produce deviations from emmetropia in tree shrews and, perhaps in humans.

### Conclusions

It is to be understood that any given elements of the disclosed embodiments of the invention may be embodied in a single structure, a single step, a single substance, or the like. Similarly, a given element of the disclosed embodiment may be embodied in multiple structures, steps, substances, or the like.

The foregoing description illustrates and describes the processes, machines, manufactures, compositions of matter, and other teachings of the present disclosure. Additionally, the disclosure shows and describes only certain embodiments of the processes, machines, manufactures, compositions of matter, and other teachings disclosed, but, as mentioned above, it is to be understood that the teachings of the present disclosure are capable of use in various other combinations, modifications, and environments and is capable of changes or modifications within the scope of the teachings as expressed herein, commensurate with the skill and/or knowledge of a person having ordinary skill in the relevant art. The embodiments described hereinabove are further intended to explain certain best modes known of practicing the processes, machines, manufactures, compositions of matter, and other teachings of the present disclosure and to enable others skilled in the art to utilize the teachings of the present disclosure in such, or other, embodiments and with the various modifications required by the particular applications or uses. Accordingly, the processes, machines, manufactures, compositions of matter, and other teachings of the present disclosure are not intended to limit the exact embodiments and examples disclosed herein. Any section headings herein shall not limit or characterize the invention(s) set forth by the claims.

## Claims

1. A lens for use in improving emmetropization in an eye of a subject, said eye having a short-wavelength focal plane and a long-wavelength focal plane relatively farther from the cornea than the short-wavelength focal plane, wherein the lens is configured to adjust the vision in the eye to achieve an increase of the distance between the long-wavelength focal plane and the short wavelength focal plane; said lens comprising:
(a) a first focal zone of a more positive dioptric power and tinted to absorb relatively less visible light at the short end of the visible spectrum; and
(b) a second focal zone of a more negative dioptric power than the first focal zone, and tinted to absorb relatively more visible light at the short end of the spectrum than the first focal zone.

2. The lens of claim 1, wherein the lens adjusts the vision in the eye to further achieve positioning the short wavelength focal plane closer to the cornea than it would normally be located.

3. The lens of claim 1 or claim 2, wherein the short-wavelength focal plane is predominantly blue; and/or wherein the long-wavelength focal plane is predominantly red.

4. The lens of any one of claims 1-3, wherein the long-wavelength focal plane is in focus on the retina.

5. A vision correction device (100) that is configured to be worn by a human subject, the device (100) comprising the lens of claim 1.

6. The lens of claim 1 or the device of claim 5, wherein the subject has myopia, and wherein the dioptric power of the second focal zone is sufficientto correct the myopia.

7. The lens of claim 1 or claim 6 or the device of claim 5 or claim 6, wherein the first focal zone's dioptric power is at least +0.25 diopters greater than the second focal zone's dioptric power, about +0.5 to +3.0 diopters greater than the second focal zone's dioptric power, or about +2.0 diopters greater than the second focal zone's dioptric power.

8. The lens of any one of claims 1, 5 or 6 or the device of any one of claims 5-7, wherein the first focal zone is tinted to absorb relatively less visible light equal to or less than a spectral cutoff point between 420 nm and 560 nm wavelength, and absorb relatively more visible light above said spectral cutoff point.

9. The lens of any one of claims 1 or 6-8 or the device of any one of claims 5-8, wherein the second focal zone is tinted to absorb relatively more visible light equal to or less than a spectral cutoff point between 420 nm and 560 nm wavelength, and absorb relatively less of the visible light above said spectral cutoff point.

10. The lens of any one of claims 1 or 6-9 or the device of any one of claims 5-9, wherein the first focal zone is tinted blue; and/or the second focal zone is tinted clear or is tinted yellow.

11. The lens of any one of claims 1 or 6-10 or the device of any one of claims 5-10, wherein the first focal zone is either circular or annular, and wherein the second focal zone is either circular or annular and is concentric with the first focal zone.

12. The lens of any one of claims 1 or 6-11 or the device of any one of claims 5-11, wherein the corrective device comprises: at least one additional focal zone, the additional focal zone being: i) about equal to the first focal zone in tint and dioptric power, or ii) about equal to the second focal zone in tint and dioptric power.

13. The lens of any one of claims 1 or 6-12 or the device of any one of claims 5-12, wherein the corrective device comprises: multiple additional focal zones (130), each of the additional focal zones being about equal in tint and dioptric power to either: the first focal zone or the second focal zone; optionally wherein said multiple additional zones occur in an alternating pattern between zones equal in tint and dioptric power to the first focal zone and zones equal in tint and dioptric power to the second focal zone.

14. The lens of any one of claims 1 or 6 to 13 or the device of any one of claims 5-13, wherein:
(a) the first focal zone is either circular or annular;
(b) the second focal zone is either circular or annular and is concentric with the first focal zone;
(c) the device comprises a first group of additional focal zones being about equal in tint and dioptric power to the first focal zone, wherein each of the first group of additional focal zones is circular or annular and is concentric with the first focal zone; and
(d) the device comprises a second group of additional focal zones being about equal in tint and dioptric power to the second focal zone, wherein each of the second group of additional focal zones is circular or annular and is concentric with the first focal zone.

15. The lens of any one of claims 1 or 6 to 13 or the device of any one of claims 5-13, wherein the focal zones are presented as separate small round zones or separate small zones of other shapes.

16. The lens of any one of claims 1 or 6 to 13 or the device of any one of claims 5-13, wherein one of the focal zones comprises multiple spots on the device 100, and the other focal zone makes up the interstitial space between said multiple spots.

## Patentansprüche

1. Eine Linse zur Verbesserung der Emmetropisierung eines Auges eines Probanden, wobei das Auge eine Kurzwellen-Brennebene und eine Langwellen-Brennebene aufweist, die relativ weiter von der Hornhaut entfernt ist als die Kurzwellen-Brennebene, wobei die Linse ausgebildet ist, die Sehkraft
des Auges anzupassen, um eine Zunahme des Abstand zwischen der lang-Brennebene und der Kurzwellen-Brennebene zu erzielen;
wobei die Linse Folgendes umfasst:
(a) eine erste Fokuszone mit einer mehr positiven Dioptrienzahl, die so getönt ist, dass sie am kurzen Ende des sichtbaren Spektrums relativ weniger sichtbares Licht absorbiert; und
(b) eine zweite Fokuszone mit einer mehr negativen Dioptrienzahl als die erste Fokuszone, die so getönt ist, dass sie am kurzen Ende des Spektrums relativ mehr sichtbares Licht absorbiert als die erste Fokuszone.

2. Linse nach Anspruch 1, wobei die Linse die Sehkraft des Auges so anpasst, dass die Kurzwellen-Brennebene näher an der Hornhaut liegt, als dies normalerweise der Fall wäre.

3. Linse nach Anspruch 1 oder Anspruch 2, wobei die Kurzwellen-Brennebene überwiegend blau ist; und/oder wobei die Langwellen-Brennebene überwiegend rot ist.

4. Linse nach einem der Ansprüche 1 bis 3, wobei die Langwellen-Brennebene auf der Netzhaut fokussiert ist.

5. Sehkraftkorrekturvorrichtung (100), die dazu ausgelegt ist, von einem Probanden getragen zu werden, wobei die Vorrichtung (100) die Linse nach Anspruch 1 umfasst.

6. Linse nach Anspruch 1 oder Vorrichtung nach Anspruch 5, wobei der Proband an Kurzsichtigkeit leidet und wobei die Brechkraft der zweiten Fokuszone ausreicht, um die Kurzsichtigkeit zu korrigieren.

7. Linse nach Anspruch 1 oder Anspruch 6 oder Vorrichtung nach Anspruch 5 oder Anspruch 6, wobei die Dioptrienzahl der ersten Fokuszone mindestens +0,25 Dioptrien größer ist als die Dioptrienzahl der zweiten Fokuszone, etwa +0,5 bis +3,0 Dioptrien größer als die Dioptrienzahl der zweiten Fokuszone,
oder etwa +2,0 Dioptrien größer als die Dioptrienzahl der zweiten Fokuszone.

8. Linse nach einem der Ansprüche 1, 5 oder 6 oder Vorrichtung nach einem der Ansprüche 5 bis 7, wobei die erste Fokuszone so getönt ist, dass sie relativ weniger sichtbares Licht mit einer Wellenlänge von 420 nm bis 560 nm - was einem spektralen Grenzwert entspricht oder darunter liegt - absorbiert und relativ mehr sichtbares Licht oberhalb dieses spektralen Grenzwerts absorbiert.

9. Linse nach einem der Ansprüche 1 oder 6-8 oder Vorrichtung nach einem der Ansprüche 5-8, wobei die zweite Fokuszone so getönt ist, dass sie relativ mehr sichtbares Licht mit einer Wellenlänge, die gleich oder kleiner als ein spektraler Grenzwert zwischen 420 nm und 560 nm ist, absorbiert und relativ weniger sichtbares Licht oberhalb des genannten spektralen Grenzwerts absorbiert.

10. Linse nach einem der Ansprüche 1 oder 6 bis 9 oder Vorrichtung nach einem der Ansprüche 5 bis 9, wobei die erste Fokuszone blau getönt ist; und/oder die zweite Fokuszone klar oder gelb getönt ist.

11. Linse nach einem der Ansprüche 1 oder 6 bis 10 oder Vorrichtung nach einem der Ansprüche 5 bis 10, wobei die erste Fokuszone entweder kreisförmig oder ringförmig ist, und wobei die zweite Fokuszone entweder kreisförmig oder ringförmig ist und konzentrisch zur ersten Fokuszone liegt.

12. Linse nach einem der Ansprüche 1 oder 6-11 oder Vorrichtung nach einem der Ansprüche 5-11, wobei die Korrekturvorrichtung Folgendes umfasst: mindestens eine zusätzliche Fokuszone, wobei die zusätzliche Fokuszone: i) hinsichtlich Tönung und Dioptrienwert in etwa der ersten Fokuszone entspricht oder ii) hinsichtlich Tönung und Dioptrienwert in etwa der zweiten Fokuszone entspricht.

13. Linse nach einem der Ansprüche 1 oder 6-12 oder Vorrichtung nach einem der Ansprüche 5-12, wobei die Korrekturvorrichtung Folgendes umfasst: mehrere zusätzliche Fokuszonen (130), wobei jede der zusätzlichen Fokuszonen hinsichtlich Tönung und Dioptrienzahl in etwa entweder der ersten Fokuszone oder der zweiten Fokuszone entspricht; wobei optional die mehreren zusätzlichen Zonen in einem abwechselnden Muster zwischen Zonen, die in Tönung und Dioptrienzahl der ersten Fokuszone entsprechen, und Zonen, die in Tönung und Dioptrienzahl der zweiten Fokuszone entsprechen, angeordnet sind.

14. Linse nach einem der Ansprüche 1 oder 6 bis 13 oder Vorrichtung nach einem der Ansprüche 5 bis 13, wobei:
(a) die erste Fokuszone entweder kreisförmig oder ringförmig ist;
(b) die zweite Fokuszone entweder kreisförmig oder ringförmig ist und konzentrisch zur ersten Fokuszone liegt;
(c) die Vorrichtung eine erste Gruppe zusätzlicher Fokuszonen umfasst, die hinsichtlich ihrer Tönung und ihrer Dioptrienzahl in etwa der ersten Fokuszone entsprechen, wobei jede der zusätzlichen Fokuszonen der ersten Gruppe kreisförmig oder ringförmig ist und konzentrisch zur ersten Fokuszone liegt; und
(d) die Vorrichtung eine zweite Gruppe zusätzlicher Fokuszonen umfasst, die hinsichtlich ihrer Tönung und ihrer Dioptrienzahl in etwa der zweiten Fokuszone entsprechen, wobei jede der zusätzlichen Fokuszonen der zweiten Gruppe kreisförmig oder ringförmig ist und konzentrisch zur ersten Fokuszone angeordnet ist.

15. Linse nach einem der Ansprüche 1 oder 6 bis 13 oder Vorrichtung nach einem der Ansprüche 5 bis 13, wobei die Fokuszonen als separate kleine runde Zonen oder als separate kleine Zonen anderer Formen ausgebildet sind.

16. Linse nach einem der Ansprüche 1 oder 6 bis 13 oder Vorrichtung nach einem der Ansprüche 5 bis 13, wobei eine der Fokuszonen mehrere Punkte auf der Vorrichtung 100 umfasst und die andere Fokuszone den Zwischenraum zwischen diesen mehreren Punkten bildet.

## Revendications

1. Lentille destinée à être utilisée pour améliorer l'emmétropisation dans un œil d'un sujet, ledit œil présentant un plan focal à courte longueur d'onde et un plan focal à longue longueur d'onde relativement plus éloigné de la cornée que le plan focal à courte longueur d'onde, dans laquelle la lentille est configure pour ajuster la vision dans l'œil afin d'obtenir une augmentation de la distance entre le plan focal à longue longueur d'onde et le plan focal à courte longueur d'onde ; ladite lentille comprenant :
(a) une première zone focale d'une puissance dioptrique plus positive et teintée pour absorber une quantité relativement moindre de lumière visible à l'extrémité courte du spectre visible ; et
(b) une seconde zone focale d'une puissance dioptrique plus négative que la première zone focale, et teintée pour absorber une quantité relativement supérieure de lumière visible à l'extrémité courte du spectre que la première zone focale.

2. Lentille selon la revendication 1, dans laquelle la lentille ajuste la vision dans l'œil pour obtenir en outre un positionnement du plan focal à courte longueur d'onde plus près de la cornée qu'il ne le serait normalement.

3. Lentille selon la revendication 1 ou la revendication 2, dans laquelle le plan focal à courte longueur d'onde est principalement bleu ; et/ou dans laquelle le plan focal à longue longueur d'onde est principalement rouge.

4. Lentille selon l'une quelconque des revendications 1 à 3, dans laquelle le plan focal à longue longueur d'onde est focalisé sur la rétine.

5. Dispositif de correction de vision (100) qui est configuré pour être porté par un sujet humain, le dispositif (100) comprenant la lentille de la revendication 1.

6. Lentille selon la revendication 1 ou dispositif selon la revendication 5, le sujet présentant une myopie, et la puissance dioptrique de la seconde zone focale étant suffisante pour corriger la myopie.

7. Lentille selon la revendication 1 ou la revendication 6 ou dispositif selon la revendication 5 ou la revendication 6, la puissance dioptrique de la première zone focale étant supérieure d'au moins +0,25 dioptrie à la puissance dioptrique de la seconde zone focale, supérieure d'environ +0,5 à +3,0 dioptries à la puissance dioptrique de la seconde zone focale, ou supérieure d'environ +2,0 dioptries à la puissance dioptrique de la seconde zone focale.

8. Lentille selon l'une quelconque des revendications 1, 5 ou 6 ou dispositif selon l'une quelconque des revendications 5 à 7, la première zone focale étant teintée pour absorber une quantité relativement moindre de lumière visible d'une longueur d'onde inférieure ou égale à celle d'un point de coupure spectrale comprise entre 420 nm et 560 nm, et absorber une quantité relativement plus importante de lumière visible d'une longueur d'onde supérieure à celle dudit point de coupure spectrale.

9. Lentille selon l'une quelconque des revendications 1 ou 6 à 8 ou dispositif selon l'une quelconque des revendications 5 à 8, la seconde zone focale étant teintée pour absorber une quantité relativement plus importante de lumière visible d'une longueur d'onde égale ou inférieure à un point de coupure spectrale comprise entre 420 nm et 560 nm, et absorber relativement moins de lumière visible au-dessus dudit point de coupure spectrale.

10. Lentille selon l'une quelconque des revendications 1 ou 6 à 9 ou dispositif selon l'une quelconque des revendications 5 à 9, la première zone focale étant teintée en bleu ; et/ou la seconde zone focale étant teintée en clair ou étant teintée en jaune.

11. Lentille selon l'une quelconque des revendications 1 ou 6 à 10 ou dispositif selon l'une quelconque des revendications 5 à 10, la première zone focale étant circulaire ou annulaire, et la seconde zone focale étant circulaire ou annulaire et étant concentrique par rapport à la première zone focale.

12. Lentille selon l'une quelconque des revendications 1 ou 6 à 11 ou dispositif selon l'une quelconque des revendications 5 à 11, le dispositif de correction comprenant : au moins une zone focale supplémentaire, la zone focale supplémentaire étant : i) environ égale à la première zone focale en termes de teinte et de puissance dioptrique, ou ii) environ égale à la seconde zone focale en termes de teinte et de puissance dioptrique.

13. Lentille selon l'une quelconque des revendications 1 ou 6 à 12 ou dispositif selon l'une quelconque des revendications 5 à 12, le dispositif de correction comprenant : de multiples zones focales supplémentaires (130), chacune des zones focales supplémentaires étant environ égale en termes de teinte et de puissance dioptrique à la première zone focale ou à la seconde zone focale ; facultativement lesdites multiples zones supplémentaires survenant selon un motif alterné entre des zones égales en termes de teinte et de puissance dioptrique à la première zone focale et des zones égales en termes de teinte et de puissance dioptrique à la seconde zone focale.

14. Lentille selon l'une quelconque des revendications 1 ou 6 à 13 ou dispositif selon l'une quelconque des revendications 5 à 13 :
(a) la première zone focale étant circulaire ou annulaire ;
(b) la seconde zone focale étant circulaire ou annulaire et étant concentrique par rapport à la première zone focale ;
(c) le dispositif comprenant un premier groupe de zones focales supplémentaires qui sont environ égales en termes de teinte et de puissance dioptrique à la première zone focale, chaque zone du premier groupe de zones focales supplémentaires étant circulaire ou annulaire et étant concentrique par rapport à la première zone focale ; et
(d) le dispositif comprenant un second groupe de zones focales supplémentaires qui sont environ égales en termes de teinte et de puissance dioptrique à la seconde zone focale, chaque zone du second groupe de zones focales supplémentaires étant circulaire ou annulaire et concentrique par rapport à la première zone focale.

15. Lentille selon l'une quelconque des revendications 1 ou 6 à 13 ou dispositif selon l'une quelconque des revendications 5 à 13, les zones focales étant présentées sous la forme de petites zones rondes séparées ou de petites zones séparées d'autres formes.

16. Lentille selon l'une quelconque des revendications 1 ou 6 à 13 ou dispositif selon l'une quelconque des revendications 5 à 13, une certaine des zones focales comprenant de multiples taches sur le dispositif 100, et l'autre zone focale constituant l'espace interstitiel entre lesdites multiples taches
